# EUROPÄISCHE PATENTSCHRIFT

(11) **EP 2 057 023 B1**
(45) Veröffentlichungstag und Bekanntmachung des Hinweises auf die Patenterteilung: **05.06.2013**
(21) Anmeldenummer: 07856862.3
(22) Anmeldetag: 18.12.2007
(51) Int. Cl.: B60G 7/02, B60G 9/00, B62D 21/02

(54) **RAHMENANORDNUNG FÜR EIN FAHRZEUG**
FRAME ARRANGEMENT FOR A VEHICLE
ENSEMBLE DE CHÂSSIS POUR UN VÉHICULE

(30) Priorität: 20.12.2006 DE 102006060405
(43) Veröffentlichungstag der Anmeldung: 13.05.2009
(73) Patentinhaber: SAF-HOLLAND GmbH, 63856 Bessenbach (DE)
(72) Erfinder: KOSCHINAT, Hubert, 63768 Hösbach (DE)
(74) Vertreter: Müller Schupfner & Partner
(86) Internationale Anmeldenummer: PCT/EP2007/011139
(87) Internationale Veröffentlichungsnummer: WO 2008/074480

(56) Entgegenhaltungen:
- EP-A- 1 380 448
- EP-A- 1 481 824
- DE-A1-102004 054 939
- FR-A- 2 314 069

## Beschreibung

Die vorliegende Erfindung bezieht sich auf eine Rahmenanordnung für ein Fahrzeug, insbesondere Nutzfahrzeug, welche in der Regel aus zwei U- oder doppel-T-förmigen Profilen besteht, die als Längsträger jeweils in konstruktiv festgelegtem Abstand parallel zueinander über Querträger zu einem so genannten "Leiterrahmen" zusammengefügt sind, an welchem Fahrzeugelemente, wie z. B. Ladeflächen, Aufbauten, Bremseinrichtung, Fahrwerk usw., angeordnet sind.

Derartige Rahmenanordnungen sind in der Regel derart ausgebildet, dass die einzelnen Profile miteinander verschweißt, vernietet oder verschraubt sind, um somit einen starren Fahrzeugrahmen auszubilden. Problematisch bei derartigen Rahmenanordnungen ist jedoch, dass die Verwindungsfähigkeit dieses Verbundes so weit eingeschränkt sein kann, dass bei einer Nutzung des Fahrzeugs Risse in der Rahmenanordnung auftreten können, insbesondere an Schweißnähten und/oder an Übergangsstellen mit besonders ausgeprägten Steifigkeitsunterschieden.

Die EP 1 481 824 betrifft eine gattungsgemäße Achsaufhängung mit einem Befestigungselement, welches an einem sich in Fahrzeuglängsrichtung erstreckenden Rahmenelement befestigt ist und welches über ein quer zum ersten Rahmenelement angeordnetes zweites Rahmenelement zusätzlich versteift ist.

Die FR 2 314 069 zeigt ein Achsaufhängungssystem mit einem sich in Fahrzeuglängsrichtung erstreckenden ersten Rahmenelement, an welchem ein Befestigungselement angeordnet ist, welches zur schwenkbaren Aufnahme eines Längslenkers ausgebildet ist, wobei an dem Befestigungselement sich ein in Fahrzeugquerrichtung erstreckendes zweites Rahmenelement

Es ist somit Aufgabe der vorliegenden Erfindung, eine Rahmenanordnung für ein Fahrzeug, insbesondere Nutzfahrzeug, vorzusehen, welche die eingeleiteten Kräfte sicher aufnehmen kann und gleichzeitig die erforderliche Elastizität gewährleistet.

Diese Aufgabe wird durch eine Rahmenanordnung für ein Fahrzeug, insbesondere Nutzfahrzeug, gelöst, welche die in Anspruch 1 angegebenen Merkmale enthält. Bevorzugte Ausführungsformen sind Gegenstand der abhängigen Ansprüche. Erfindungsgemäß ist eine Rahmenanordnung für ein Fahrzeug, insbesondere Nutzfahrzeug, vorgesehen, umfassend ein erstes Rahmenelement, welches sich im wesentlichen in Fahrzugslängsrichtung erstreckt, ein Befestigungselement, welches an dem ersten Rahmenelement angeordnet ist und zur Lagerung eines Achslenkers ausgebildet ist, und ein zweites Rahmenelement, welches im wesentlichen rechtwinklig zum ersten Rahmenelement angeordnet ist, wobei das zweite Rahmenelement derart an dem Befestigungselement befestigt ist, dass das zweite Rahmenelement das Befestigungselement zumindest bereichsweise umgreift. Das erste Rahmenelement erstreckt sich im Wesentlichen in Fahrzeuglängsrichtung, d. h. im Wesentlichen parallel zu einer Fahrzeuglängsachse. Besonders vorteilhaft sind zwei Rahmenelemente vorgesehen, wobei jeweils ein Rahmenelement an einer Seite des Fahrzeugs (der rechten Seite und linken Seite) vorgesehen ist. Das erste Rahmenelement kann aus zwei U-förmigen Profilen derart ausgebildet sein, dass die Basis der U-förmigen Profile zueinander hingewandt ist, und die distalen Endbereiche voneinander weggerichtet sind. Das erste Rahmenelement kann auch aus einem doppelt T-förmigen Profil ausgebildet sein. Es versteht sich, dass das erste Rahmenelement auch aus einer beliebig anderen Querschnittskonfiguration aufgebaut sein kann. An dem ersten Rahmenelement ist ein Befestigungselement vorgesehen, welches zur Lagerung bzw. Befestigung eines Achslenkers bzw. Längslenkers ausgebildet ist. Das Befestigungselement weist somit Vorteilhafterweise einen Lagerbereich auf, an welchem der Achslenker vorzugsweise dreh- bzw. rotierbar befestigt ist. Das zweite Rahmenelement ist Vorteilhafterweise im Wesentlichen rechtwinklig bzw. senkrecht zum ersten Rahmenelement angeordnet. In anderen Worten ist das zweite Rahmenelement derart angeordnet, dass dieses im Wesentlichen quer zur Fahrzeuglängsrichtung steht. Diese Anordnung umfasst insbesondere eine Rahmenanordnung, bei welcher sich das zweite Rahmenelement zwischen zwei voneinander beabstandeten ersten Rahmenelementen erstreckt. Infolgedessen muss ein Befestigungsbereich des zweiten Rahmenelements am ersten Rahmenelement nicht notwendigerweise im Wesentlichen rechtwinklig zu diesem angeordnet sein, sondern kann ebenfalls in einem beliebigen Winkel zum ersten Rahmenelement stehen. Die Rahmenanordnung wird Vorteilhafterweise für Fahrzeuge genutzt, welche ein Achssystem mit einem Luftfederaggregat besitzen. Bei diesen Achssystemen werden im Wesentlichen alle auftretenden Vertikalkräfte sowohl über das Befestigungselement als auch über den Luftfederbalg in die Rahmenanordnung, insbesondere das erste Rahmenelement, eingeleitet. Die verbleibenden Kräfte, wie z. B. Seitenkräfte, Bremskräfte oder Stabilisierungsmomente, können jedoch nur über das Befestigungselement in die Rahmenanordnung eingeleitet werden, da der Luftfederbalg in der Regel nur vertikal gerichtete Kräfte übertragen kann. Aus diesem Grund ist das Verbundsystem zwischen erstem Rahmenelement, Befestigungselement sowie Achslenker sehr hoch beansprucht und erfordert konstruktiv hohe Anforderungen an deren Festigkeit. Andererseits ist es jedoch erforderlich, diese Komponenten möglichst elastisch zu gestalten, so dass sich die Rahmenanordnung in einem vorgegebenen Maße verwinden kann. Daher ist, gemäß der Erfindung, das zweite Rahmenelement derart an dem Befestigungselement befestigt, dass das zweite Rahmenelement das Befestigungselement zumindest bereichsweise umgreift. Dadurch ist es möglich, die besonders gefährdeten Bereiche an dem Befestigungselement durch die Querträgerumgreifungen und Befestigungen mittels Vorteilhafterweise dehnfähigen Schraubverbindungen oder Nieten so zu gestalten, dass die Einleitung aller auftretenden Kraftarten großflächig verteilt wird und die Rahmenanordnung dabei gleichzeitig elastisch bleibt.

Das zweite Rahmenelement weist einen Befestigungsabschnitt auf, der im Wesentlichen U-förmig ausgebildet ist, wobei die Schenkel des U's bildende Seitenabschnitte an dem Befestigungselement angeordnet sind. Der Befestigungsabschnitt des zweiten Rahmenelements ist im Querschnitt Vorteilhafterweise U-förmig ausgebildet, wobei die Seitenabschnitte des Befestigungsabschnitts im Wesentlich parallel zu einer Erstreckungsrichtung des ersten Rahmenelements bzw. parallel zur Fahrzeuglängsrichtung angeordnet sind. Das zweite Rahmenelement umgreift somit das Befestigungselement in Fahrzuglängsrichtung, insbesondere von vorne. Hierbei sind Erfindungsgemäß die Schenkel des U's bildenden Seitenabschnitts an Schweißwandbereichen des Befestigungselements angeordnet bzw. befestigt.

Vorteilhafterweise ist das zweite Rahmenelement zumindest im Bereich des Befestigungsabschnitts einteilig bzw. einstückig ausgebildet. Hierdurch wird ein besonders stabiles zweites Rahmenelement im Bereich des Befestigungsabschnitts vorgesehen, so dass durch das zweite Rahmenelement besonders hohe Kräfte aufgenommen werden können.

In einer weiteren bevorzugten Ausführungsform ist das zweite Rahmenelement zumindest im Bereich des Befestigungsabschnitts mehrteilig bzw. mehrstückig, vorzugsweise zweiteilig, ausgebildet. Hierdurch ist es möglich, das zweite Rahmenelement besonders variabel und flexibel auszubilden, so dass der Befestigungsabschnitt des zweiten Rahmenelements auf verschiedene Befestigungs-element-Größen "einstellbar" ist. Durch die mehrteilige Ausgestaltung des zweiten Rahmenelements im Bereich des Befestigungsabschnitts wird darüber hinaus eine vorteilhafte Produktionsvereinfachung ermöglicht.

Zweckmäßigerweise weist das zweite Rahmenelement einen sich im Wesentlichen senkrecht zu Längserstreckung des zweiten Rahmenelements erstreckenden ersten Endabschnitt auf, der vorzugsweise an der Außenseite des Befestigungselement angeordnet ist. Der erste Endabschnitt entspricht hierbei insbesondere dem eingangs erwähnten zweiten Abschnitt des zweiten Rahmenelements, so dass sich dieser besonders vorteilhaft parallel zur Fahrzeuglängsrichtung erstreckt. Zweckmäßigerweise ist der erste Endabschnitt an der Außenseite des Befestigungselements angeordnet bzw. befestigt. Die Außenseite ist hierbei diejenige Seite des Befestigungselements, welche am Fahrzeug nach au-βen hin, bzw. der Fahrzeugaußenseite hin, zugewandt ist.

Ferner weist das zweite Rahmenelement mit Vorteil einen vorzugsweise im Wesentlichen L-förmigen zweiten Endabschnitt auf, der an der Innenseite des Befestigungselements angeordnet ist. Die Innenseite des Befestigungselements ist hierbei insbesondere diejenige Seite des Befestigungselements, welche der Fahrzeuginnenseite hin zugewandt ist. Bei einer Rahmenanordnung mit zwei ersten Rahmenelementen, die sich jeweils entlang der Seitenbereiche des Fahrzeugs voneinander beabstandet und parallel zueinander erstrecken, sind die Innenseiten des Befestigungselements somit einander zugewandt, wohingegen die Außenseiten des Befestigungselements voneinander abgewandt sind. Die im Wesentlichen L-förmige Ausbildung des zweiten Endabschnitts ist besonders vorteilhaft bei einer vom ersten Endabschnitt separaten Ausbildung, d. h. bei der eingangs erwähnten mehrteiligen bzw. mehrstückigen Ausbildung des zweiten Rahmenelements zumindest im Bereich des Befestigungsabschnitts. Es versteht sich, dass der zweite Endabschnitt auch eine beliebig andere, von der L-Form verschiedene Konfiguration aufweisen kann, solange mittels der Kombination von erstem und zweitem Endabschnitt ein Bereich des Befestigungselements umgriffen wird.

Vorteilhafterweise ist der zweite Endabschnitt über Befestigungsmittel, wie Nieten oder Schrauben, am Befestigungsabschnitt des zweiten Rahmenelements befestigt. Hierdurch bleibt die Verbindung zwischen zweitem Rahmenelement und dem zweiten Endabschnitt elastisch und kann somit allen erforderlichen Nachgiebigkeiten auf Dauer folgen.

Weiterhin vorteilhaft ist das zweite Rahmenelement über Befestigungsmittel, wie Schrauben oder Nieten, am Befestigungselement befestigt. Die Befestigungsmittel sind hierbei Vorteilhafterweise im Wesentlichen quer zur Fahrtrichtung angeordnet und so gestaltet, dass die Verbindung zwischen zweitem Rahmenelement und Befestigungselement elastisch bleibt und somit allen erforderlichen Nachgiebigkeiten auf Dauer folgen kann. Dies wird insbesondere durch die Eigenelastizität der Befestigungsmittel bewirkt. Ferner wird dieser Effekt dadurch verstärkt, dass das Befestigungselement und das zweite Rahmenelement nicht wie bei einer Schweißung starr aneinander befestigt sind, sondern geringe Versetzbewegungen zueinander aufgrund der separaten bzw. mehrteiligen Ausbildung ermöglicht werden.

Bevorzugterweise ist das zweite Rahmenelement als sich im Wesentlichen quer zur Fahrtrichtung erstreckender Querträger ausgebildet. Der Querträger erstreckt sich hierbei Vorteilhafterweise in einer horizontalen Ebene derart quer zur Fahrtrichtung, dass dieser zwischen zwei gegenüberliegenden Befestigungselementen einer Achse angeordnet ist. Der Querträger kann hierbei einteilig bzw. einstückig oder mehrteilig bzw. mehrstückig ausgebildet sein. Durch die mehrteilige bzw. mehrstückige Ausbildung wird besonders Vorteilhafterweise gewährleistet, dass verschiedene Mittenabstände der Fahrzeuglängsträger über das gleiche Querträger-System verbunden werden können.

In einer weiteren bevorzugten Ausführungsform weist die Rahmenanordnung weiterhin eine Versteifungseinheit auf, welche aus zumindest einem Versteifungsprofil ausgebildet ist und zwischen erstem und zweitem Rahmenelement angeordnet ist. Die Versteifungseinheit kann aus einem im Wesentlichen einstückigen Profil ausgebildet sein. Besonders Vorteilhafterweise ist die Versteifungseinheit jedoch mehrteilig ausgebildet, beispielsweise derart, dass die einzelnen Teile teleskopartig zueinander verschoben und befestigt werden können. Das Versteifungsprofil kann eine beliebige Querschnittkonfiguration aufweisen. Besonders vorteilhaft ist das Versteifungsprofil im Querschnitt jedoch U-förmig ausgebildet. Die Versteifungseinheit erstreckt sich im Wesentlichen in vertikaler Ebene und ist am dem zweiten Rahmenelement - beabstandet von dessen Befestigungsabschnitt - angeordnet bzw. befestigt. Die Befestigung kann Vorteilhafterweise über eine Schraubverbindung erfolgen. Die Anbindung bzw. Befestigung der Versteifungseinheit an dem ersten Rahmenelement kann an diesem direkt erfolgen. Vorteilhafterweise weist das erste Rahmenelement an dessen dem Befestigungselement abgewandten Bereich ein Verstärkungselement, wie z. B. ein Stegblech, auf, an welchem die Versteifungseinheit, vorzugsweise über eine Schraubverbindung, befestigt ist. Durch die Befestigung mittels Schrauben oder Nieten wird - wie oben erwähnt - eine Vorteilhafterweise verwindungsfähige bzw. elastische Verbindung ermöglicht, so dass einer Rissbildung (wie bei einer Verschweißung) entgegengewirkt werden kann.

Zweckmäßigerweise ist die Versteifungseinheit somit durch eine Schraub- und/oder Nietverbindung am ersten und zweiten Rahmenelement befestigt.

Weitere Vorteile und Merkmale ergeben sich aus der nachfolgenden Beschreibung bevorzugter und beispielhafter Ausführungsformen der erfindungsgemäßen Rahmenanordnung mit Bezug auf die beigefügten Figuren, wobei einzelne Elemente oder Merkmale der Ausführungsformen zu einer neuen Ausführungsform kombiniert werden können. Es zeigen:
Fig. 1 eine Frontalansicht, eine Draufsicht sowie eine Seitenansicht einer ersten beispielhaften Ausführungsform der erfindungsgemäßen Rahmenanordnung.
Fig. 2 eine Frontalansicht, eine Draufsicht sowie eine Seitenansicht einer zweiten beispielhaften Ausführungsform der erfindungsgemäßen Rahmenanordnung.

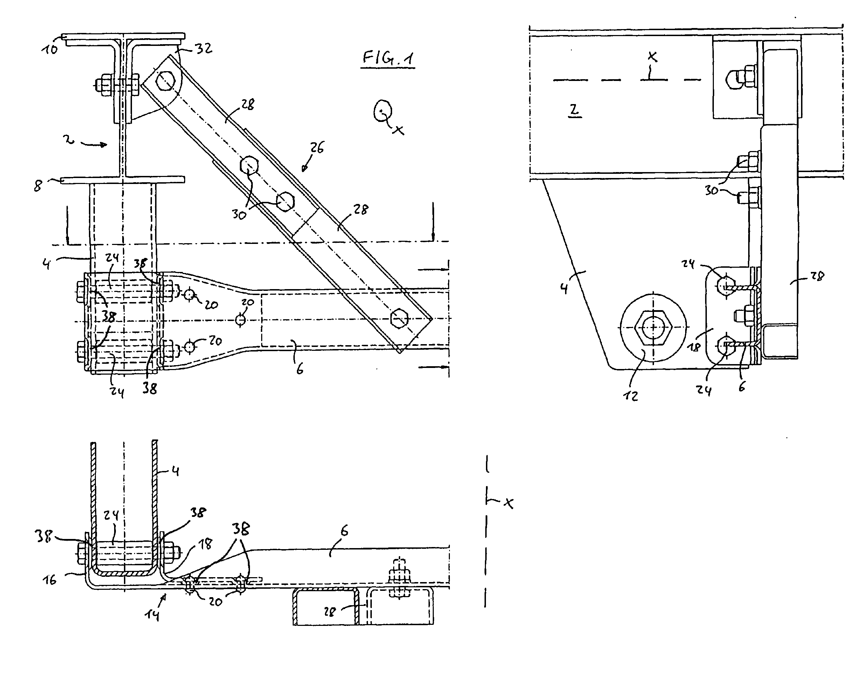

In Fig. 1 ist eine Frontalansicht, eine Draufsicht sowie eine Seitenansicht einer beispielhaften Ausführungsform der erfindungsgemäßen Rahmenanordnung für ein Fahrzeug, insbesondere Nutzfahrzeug, dargestellt. Die Rahmenanordnung umfasst ein erstes Rahmenelement 2, ein Befestigungselement 4 sowie ein zweites Rahmenelement 6.

Das erste Rahmenelement 2 erstreckt sich im wesentlichen in Fahrzeuglängsrichtung bzw. im Wesentlichen parallel zur Fahrzeuglängsachse X. In der Regel sind zwei erste Rahmenelemente 2 vorgesehen, welche mit Bezug auf die Fahrzeuglängsachse X voneinander beabstandet sind. Vorteilshafterweise ist das erste Rahmenelement 2 als U- oder doppel-T-förmiges Profil ausgelegt, so dass dieses Profil einen Untergurt 8 sowie einen Obergurt 10 definiert. An dem ersten Rahmenelement 2 werden weitere Fahrzeugelemente angebracht, wie z.B. Ladefläche, Aufbauten, Bremseinrichtungen und Fahrwerkskomponenten. So werden die Ladefläche und die Aufbauten entsprechend an dem Obergut 10 angeordnet, wohingegen die weiteren Fahrwerkskomponenten am Untergrund 8 zu befestigen sind. Dies erfolgt über das Befestigungselement 4, welches mit dem ersten Rahmenelement 2 - insbesondere an dessen Untergurt 8 - befestigt ist. Die Befestigung kann über eine Verschweißung erfolgen oder auch, besonders vorteilhaft, über eine Verschraubung oder Nietverbindung.

Das Befestigungselement 4 dient insbesondere der Lagerung eines Achslenkers bzw. Längslenkers, der zu dem Befestigungselement 4 dreh- bzw. schwenkbar angeordnet ist. Hierfür weist das Befestigungselement 4 eine Lageranordnung 12 auf.

Das zweite Rahmenelement 6 ist Vorteilhafterweise im Wesentlichen rechtwinklig, d.h. quer zur Fahrzeuglängsachse X, zum ersten Rahmenelement 2 angeordnet. Infolgedessen ist das zweite Rahmenelement 6 insbesondere als sich quer zur Fahrtrichtung erstreckender Querträger ausgebildet, der eine Verbindung zwischen beiden beabstandeten ersten Rahmenelementen 2 darstellt. Das zweite Rahmenelement 6 kann einteilig ausgebildet sein. Vorteilhafterweise ist dieses jedoch mehrteilig ausgebildet, um somit verschiedene Abstände der ersten Rahmenelemente 2 zur Fahrzeugmitte berücksichtigen zu können.

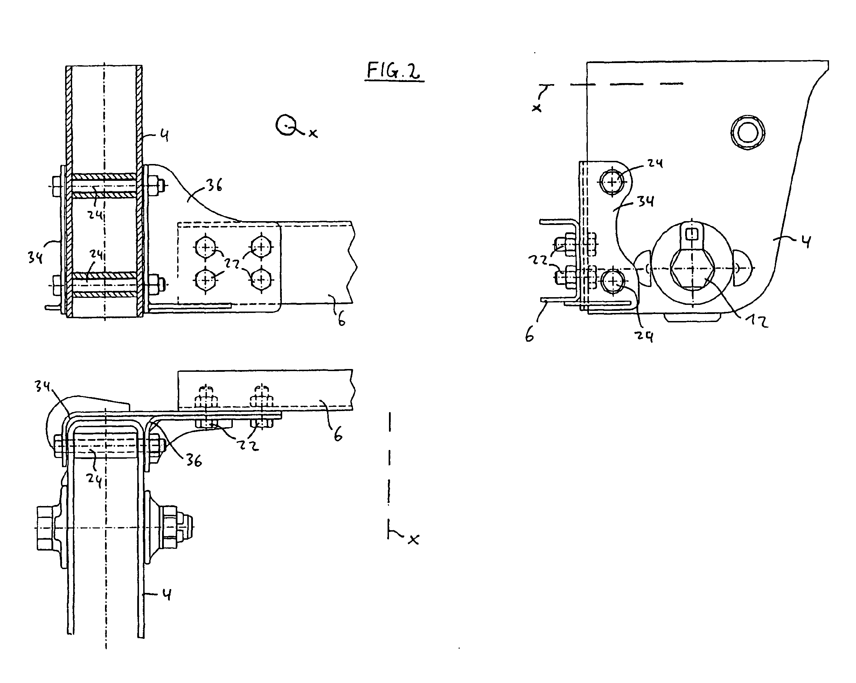

Das zweite Rahmenelement 6 ist derart am Befestigungselement 4 befestigt, dass das zweite Rahmenelement 6 das Befestigungs-element 4 zumindest bereichsweise umgreift. Hierfür weist das zweite Rahmenelement 6 einen Befestigungsabschnitt 14 auf, der im Querschnitt im wesentlichen U-förmig ausgebildet ist. Die Schenkel des U's bildende Seitenabschnitte sind infolgedessen an Seitenwandungen des Befestigungselements 4 angeordnet. Die Seitenabschnitte werden durch einen ersten Endabschnitt 16 sowie einen zweiten Endabschnitt 18 gebildet. Der erste Endabschnitt 16 erstreckt sich Vorteilhafterweise im wesentlichen senkrecht zur Längserstreckung des zweiten Rahmenelements 6 (d.h. im wesentlichen parallel zur Fahrzeuglängsachse X) und ist, besonders Vorteilhafterweise, an der Außenseite des Befestigungselements 4 angeordnet. Entsprechend ist der zweite Endabschnitt 18 an der Innenseite des Befestigungselements 4 angeordnet. In der dargestellten Ausführungsform ist der zweite Endabschnitt 18 im wesentlichen L-förmig ausgebildet. Es versteht sich, dass der zweite Endabschnitt 18 eine beliebig andere geometrische Konfiguration aufweisen kann, solange der zweite Endabschnitt 18 zu einer zumindest bereichsweisen Umgreifung des Befestigungselements 4 beiträgt. Im Übrigen kann der erste Endabschnitt 16 ebenfalls an der Innenseite des Befestigungselements angeordnet sein, so dass der zweite Endabschnitt 18 konsequenterweise die Außenseite des Befestigungselements 4 umgreift. Vorteilhafterweise ist der zweite Endabschnitt 18 über Befestigungsmittel, die als Nietverbindung 20 oder Schraubverbindung 22 (vgl. Fig. 2) ausgebildet sein können, am Befestigungsabschnitt 14 des zweiten Rahmenelements 6 befestigt. Die Befestigung des zweiten Rahmenelements 6 am Befestigungselement 4 erfolgt über Befestigungsmittel 24, die besonders Vorteilhafterweise als Schraubverbindung ausgebildet sein können. Die Befestigungsmittel 24 erstrecken sich Vorteilhafterweise im Wesentlichen quer zur Fahrzeuglängsachse X und bilden eine elastische Verbindung zwischen dem zweiten Rahmenelement 6 und dem Befestigungselement 4. Die "elastische Verbindung" ist hierbei insbesondere dahingehend zu verstehen, dass der Verbund aus Befestigungselement 4 und zweitem Rahmenelement 6, im Gegensatz zu einer aus dem Stand der Technik bekannten Schweißverbindung, eine gewisse Verwindungsfähigkeit ermöglicht.

Besonders Vorteilhafterweise weist die Rahmenanordnung eine Versteifungseinheit 26 auf, welche sich zwischen dem zweiten Rahmenelement 6 und dem ersten Rahmenelement 2 erstreckt. Die Versteifungseinheit 26 kann einteilig bzw. einstückig ausgebildet sein. Vorzugsweise ist diese jedoch aus einer Vielzahl von Versteifungsprofilen 28 ausgebildet, welche vorzugsweise teleskopartig ineinander verschieblich bewegbar sind und in einer bestimmten Position mittels einer Schraubverbindung 30 auf eine bestimmte Länge befestigbar sind. Die Versteifungsprofile 28 sind hierbei Vorteilhafterweise im Querschnitt als U-Profil ausgebildet. Die Versteifungseinheit 26 ist an dem zweiten Rahmenelement 6 - benachbart zum Befestigungsabschnitt 14 - über eine Schraub- oder Nietverbindung befestigt. An der gegenüberliegenden Seite ist die Versteifungseinheit 26 mittelbar am ersten Rahmenelement 2 befestigt. Die Befestigung erfolgt an dieser Stelle vorzugsweise mittelbar über ein am Obergurt 10 vorgesehenes Versteifungselement 32 und ist ebenfalls als Schraub- oder Nietverbindung ausgebildet. Durch die Schraub- oder Nietverbindung wird - wie oben erläutert - eine vortheilhaft elastische Verbindung bereitgestellt, so dass eine gewisse Verwindungsfähigkeit der Rahmenanordnung gewährleistet ist.

In Fig. 2 ist eine zweite beispielhafte Ausführungsform der Rahmenanordnung dargestellt, wobei die mit der ersten Ausführungsform gleichen Elemente mit gleichen Bezugszeichen versehen sind. Im Unterschied zur ersten Ausführungsform ist das zweite Rahmenelement 6 als einfaches Längsprofil ausgebildet. Der Befestigungsabschnitt an dem Befestigungselement 4 wird hier durch einen im wesentlichen L-förmigen ersten Endabschnitt 34 und einen im wesentlichen L-förmigen zweiten Endabschnitt 36 ausgebildet, welche über Befestigungsmittel in Form einer Schraubverbindung 22 am ersten Rahmenelement 6 befestigt sind.

Entsprechend obiger Ausführungsform sind der erste Endabschnitt 34 und der zweite Endabschnitt 36 über Befestigungsmittel 24 in Form einer Schraubverbindung mit dem Befestigungselement 4 derart verbunden, dass eine gewisse Verwindungsfähigkeit zwischen diesen beiden Komponenten gewährleistet ist.

Es werden somit gemäß der Erfindung Rahmenanordnungen bereitgestellt, die eine ausreichende Festigkeit, um vertikale sowie horizontale Kräfte aufzunehmen, und gleichzeitig eine notwendige Elastizität aufweisen, um die gewünschte Verwindungsfähigkeit zu gewährleisten.

Besonders Vorteilhafterweise weist das zweite Rahmenelement 6 und/oder das Befestigungselement 4 in dem Bereich, in welchem sie miteinander befestigt bzw. aneinander fixiert sind, zu dem anderen der beiden Elemente hingerichtete Vorsprünge bzw. Erhebungen 38 zum Kontakt mit der Anlagefläche des anderen der Elemente auf. So sind in der vorliegenden dargestellten beispielhaften Ausführungsform die Erhebungen 38 an dem ersten Endabschnitt 16 und dem zweiten Endabschnitt 18 des zweiten Rahmenelements 6 derart ausgebildet, dass diese zu dem Befestigungselement 4 hin gerichtet sind. Infolgedessen sind die Kontaktflächen zwischen dem zweiten Rahmenelement 6 und dem Befestigungselement 4 derart ausgebildet, dass der Kontakt zwischen diesen Elementen nur unmittelbar um den durch die Befestigungsmittel 24 durchgeriffenen Bereich herum gegeben ist. Die übrigen Flächen bleiben frei von gegenseitigem Kontakt und können mit der entsprechenden Beschichtung dauerhaft korrosionsfrei gehalten werden. Darüber hinaus wird durch das Vorsehen von Erhebungen 38 eine aussteifende Wirkung der Elemente bewirkt, wodurch die Dauerfestigkeit erhöht werden kann. Es versteht sich, dass die Erhebungen 38 zusätzlich oder alternativ ebenfalls an entsprechenden Positionen am Befestigungselement 4 vorgesehen sein können. Darüber hinaus können - sofern das zweite Rahmenelement 6 mehrteilig ausgebildet ist - die Verbindungsstellen zwischen erstem Endabschnitt 16 und zweitem Endabschnitt 18 ebenfalls Erhebungen 38 aufweisen. Die Erhebungen 38 können hierbei im Bereich der Nietverbindung 20 entweder im ersten Endabschnitt 16, oder im zweiten Endabschnitt 18 oder in beiden Endabschnitten derart ausgebildet sein, dass lediglich ein punktueller Kontakt zwischen erstem Endabschnitt 16 und zweitem Endabschnitt 18 vorgesehen ist.

### Bezugszeichenliste

| | |
|---|---|
| 2 | erstes Rahmenelement |
| 4 | Befestigungselement |
| 6 | zweites Rahmenelement |
| 8 | Untergurt |
| 10 | Obergurt |
| 12 | Lageranordnung |
| 14 | Befestigungsabschnitt |
| 16 | erster Endabschnitt |
| 18 | zweiter Endabschnitt |
| 20 | Nietverbindung |
| 22 | Schraubverbindung |
| 24 | Befestigungsmittel |
| 26 | Versteifungseinheit |
| 28 | Versteifungsprofil |
| 30 | Schraubverbindung |
| 32 | Versteifungselement |
| 34 | erster Endabschnitt |
| 36 | zweiter Endabschnitt |
| 38 | Erhebung |
| X | Fahrzeuglängsachse |

## Patentansprüche

1. Rahmenanordnung für ein Fahrzeug, insbesondere Nutzfahrzeug, umfassend ein erstes Rahmenelement (2), welches sich im Wesentlichen in Fahrzeuglängsrichtung (X) erstreckt,
ein Befestigungselement (4), welches an dem ersten Rahmenelement (2) angeordnet ist und zur Lagerung eines Achslenkers ausgebildet ist, und ein zweites Rahmenelement (6), wobei das zweite Rahmenelement (6) im Wesentlichen rechtwinklig zum ersten Rahmenelement (2) angeordnet ist,
wobei das zweite Rahmenelement (6) derart an dem Befestigungselement (4) befestigt ist, dass das zweite Rahmenelement (6) das Befestigungselement (4) zumindest bereichsweise umgreift, wobei das zweite Rahmenelement (6) einen Befestigungsabschnitt (14) aufweist, der im Wesentlichen U-förmig ausgebildet ist, und **dadurch gekennzeichnet, dass** die Schenkel des U's bildende Seitenabschnitte (16, 18, 34, 36) an Seitenwandungen des Befestigungselements (4) angeordnet sind.

2. Rahmenanordnung nach Anspruch 1, wobei das zweite Rahmenelement (6) zumindest im Bereich des Befestigungsabschnitts (14) einteilig bzw. einstückig ausgebildet ist.

3. Rahmenanordnung nach Anspruch 1, wobei das zweite Rahmenelement (6) zumindest im Bereich des Befestigungsabschnitts (14) mehrteilig bzw. mehrstückig, vorzugsweise zweiteilig, ausgebildet ist.

4. Rahmenanordnung nach einem der vorhergehenden Ansprüche, wobei das zweite Rahmenelement (6) einen sich im Wesentlichen senkrecht zur Längserstreckung des zweiten Rahmenelements (6) erstreckenden ersten Endabschnitt (16, 34) aufweist, der vorzugsweise an der Außenseite des Befestigungselements (4) angeordnet ist.

5. Rahmenanordnung nach einem der vorhergehenden Ansprüche, wobei das zweite Rahmenelement (6) einen vorzugsweise im Wesentlichen L-förmigen zweiten Endabschnitt (18, 36) aufweist, der an der Innenseite des Befestigungselements (4) angeordnet ist.

6. Rahmenanordnung nach Anspruch 5, soweit rückbezogen auf Anspruch 3, wobei der zweite Endabschnitt (18, 36) über Befestigungsmittel, wie Nieten (20) oder Schrauben (22), am Befestigungsabschnitt (14) des zweiten Rahmenelements (6) befestigt ist.

7. Rahmenanordnung nach einem der vorhergehenden Ansprüche, wobei das zweite Rahmenelement (6) über Befestigungsmittel (24), wie Schrauben, am Befestigungselement (4) befestigt ist.

8. Rahmenanordnung nach einem der vorhergehenden Ansprüche, wobei das zweite Rahmenelement (6) als sich im Wesentlichen quer zur Fahrtrichtung erstreckender Querträger ausgebildet ist.

9. Rahmenanordnung nach einem der vorhergehenden Ansprüche, weiterhin aufweisend eine Versteifungseinheit (26), welche aus zumindest einem Versteifungsprofil (28) ausgebildet ist und zwischen dem ersten und zweiten Rahmenelement (2, 6) angeordnet ist.

10. Rahmenanordnung nach Anspruch 9, wobei die Versteifungseinheit (26) durch Schraub- und/oder Nietverbindungen am ersten und zweiten Rahmenelement (2, 6) befestigt ist.

## Claims

1. Frame arrangement for a vehicle, especially a commercial vehicle, comprising a first frame element (2), which extends essentially in the lengthwise direction (X) of the vehicle,
a fastening element (4), which is arranged on the first frame element (2) and configured to hold an axle guide, and a second frame element (6),
wherein the second frame element (6) is arranged essentially at right angles to the first frame element (2),
wherein the second frame element (6) is fastened to the fastening element (4) such that the second frame element (6) surrounds the fastening element (4) at least in some regions, wherein the second frame element (6) has a fastening segment (14) of essentially U-shaped configuration, and **characterized in that** the side segments (16, 18, 34, 36) forming the legs of the U are arranged on side walls of the fastening element (4).

2. Frame arrangement according to claim 1, wherein the second frame element (6) is configured as one part or one piece, at least in the region of the fastening segment (14).

3. Frame arrangement according to claim 1, wherein the second frame element (6) is configured with multiple parts or multiple pieces, preferably two pieces, at least in the region of the fastening segment (14).

4. Frame arrangement according to one of the preceding claims, wherein the second frame element (6) has a first end segment (16, 34) extending essentially perpendicular to the lengthwise dimension of the second frame element (6), being preferably arranged on the outside of the fastening element (4).

5. Frame arrangement according to one of the preceding claims, wherein the second frame element (6) has a preferably essentially L-shaped second end segment (18, 36), which is arranged on the inside of the fastening element (4).

6. Frame arrangement according to claim 5, insofar as referring back to claim 3, wherein the second end segment (18, 36) is secured by fasteners such as rivets (20) or bolts (22) to the fastening segment (14) of the second frame element (6).

7. Frame arrangement according to one of the preceding claims, wherein the second frame element (6) is secured by fasteners (24) such as bolts to the fastening element (4).

8. Frame arrangement according to one of the preceding claims, wherein the second frame element (6) is configured as a cross beam extending essentially transversely to the driving direction.

9. Frame arrangement according to one of the preceding claims, furthermore having a reinforcement unit (26), which is formed from at least one reinforcement profile (28) and is arranged between the first and second frame element (2, 6).

10. Frame arrangement according to claim 9, wherein the reinforcement unit (26) is secured by bolt and/or rivet connections to the first and second frame element (2, 6).

## Revendications

1. Agencement formant châssis pour un véhicule automobile, en particulier un véhicule utilitaire, comprenant un premier élément de châssis (2) qui s'étend sensiblement dans la direction longitudinale (X) du véhicule,
un élément de fixation (4), qui est agencé sur le premier élément de châssis (2) et qui est réalisé pour le montage d'un bras d'essieu, et un second élément de châssis (6), dans lequel le second élément de châssis (6) est agencé sensiblement à angle droit par rapport au premier élément de châssis (2), dans lequel le second élément de châssis (6) est fixé sur l'élément de fixation (4) de telle façon que le second élément de châssis (6) entoure l'élément de fixation (4) au moins localement, et le second élément de châssis (6) comprend une portion de fixation (14) qui est réalisée sensiblement en forme de U, et **caractérisé en ce que** des portions latérales (16, 18, 34, 36) formant les branches du U sont agencées sur des parois latérales de l'élément de fixation (4).

2. Agencement formant châssis selon la revendication 1, dans lequel le second élément de châssis (6) est réalisé d'une seule pièce ou d'un seul tenant au moins dans la région de la portion de fixation (14).

3. Agencement formant châssis selon la revendication 1, dans lequel le second élément de châssis (6) est réalisé en plusieurs pièces ou en plusieurs parties, de préférence en deux pièces, au moins dans la région de la portion de fixation (14).

4. Agencement formant châssis selon l'une des revendications précédentes, dans lequel le second élément de châssis (6) comprend une première portion terminale (16, 34) qui s'étend sensiblement perpendiculairement à l'extension longitudinale du second élément de châssis (6) et qui est agencée de préférence sur la face extérieure de l'élément de fixation (4).

5. Agencement formant châssis selon l'une des revendications précédentes, dans lequel le second élément de châssis (6) comprend une seconde portion terminale (18, 36) de préférence sensiblement en forme de L, qui est agencée sur la face intérieure de l'élément de fixation (4).

6. Agencement formant châssis selon la revendication 5, prise en dépendance de la revendication 3, dans lequel la seconde portion terminale (18, 36) est fixée sur la portion de fixation (14) du second élément de châssis (6) au moyen d'organes de fixation, comme des rivets (20) ou des vis (22).

7. Agencement formant châssis selon l'une des revendications précédentes, dans lequel le second élément de châssis (6) est fixé sur l'élément de fixation (4) au moyen d'organes de fixation (24), comme des vis.

8. Agencement formant châssis selon l'une des revendications précédentes, dans lequel le second élément de châssis (6) est réalisé sous la forme d'un support transversal s'étendant sensiblement transversalement à la direction de circulation.

9. Agencement formant châssis selon l'une des revendications précédentes, comprenant en outre une unité de rigidification (26), qui est réalisée avec au moins un profilé de rigidification et qui est agencée entre le premier et le second élément de châssis (2, 6).

10. Agencement formant châssis selon la revendication 9, dans lequel l'unité de rigidification (26) est fixée sur le premier est sur le second élément de châssis (2, 6) au moyen de liaisons à vis et/ou à rivets.
